# EUROPÄISCHE PATENTSCHRIFT

(11) **EP 3 618 635 B1**
(45) Veröffentlichungstag und Bekanntmachung des Hinweises auf die Patenterteilung: **13.10.2021**
(21) Anmeldenummer: 18720287.4
(22) Anmeldetag: 03.05.2018
(51) Int. Cl.: A21C 15/00, B65G 47/51, B65H 3/08, B65G 60/00

(54) **PRODUKTIONSANLAGE ZUR PRODUKTION VON FLACHEN, STAPELBAREN PRODUKTEN UND VERFAHREN ZUR PUFFERUNG BZW. SPEICHERUNG SOLCHER PRODUKTE**
ASSEMBLY FOR THE PRODUCTION OF FLAT, STACKABLE PRODUCTS AND METHOD FOR BUFFERING OR STORAGE OF SUCH PRODUCTS
INSTALLATION DE PRODUCTION DE PRODUITS PLATS ET EMPILABLES ET PROCÉDÉ POUR LE TAMPON OU STOCKAGE DE CES PRODUITS

(30) Priorität: 03.05.2017 EP 17169304
(43) Veröffentlichungstag der Anmeldung: 11.03.2020
(73) Patentinhaber: Haas Food Equipment GmbH, 2100 Leobendorf Niederösterreich (AT)
(72) Erfinder: BUCZOLITS, Peter, 2000 Stockerau (AT); JIRASCHEK, Stefan, 2202 Königsbrunn (AT); PATREIDER, Thomas, 32042 Calalzo di Cadore (Bl) (IT); ZWANZINGER, Gerhard, 2202 Königsbrunn (AT)
(74) Vertreter: Puchberger & Partner Patentanwälte
(86) Internationale Anmeldenummer: PCT/EP2018/061395
(87) Internationale Veröffentlichungsnummer: WO 2018/202801

(56) Entgegenhaltungen:
- EP-A1- 1 426 315
- DE-A1- 4 013 368
- DE-A1-102013 216 823
- US-A- 4 178 113

## Beschreibung

Die Erfindung betrifft eine Produktionsanlage zur Produktion von flachen, stapelbaren Produkten der Nahrungsmittelindustrie, besonders bevorzugt Backprodukten, insbesondere von, vorzugsweise flachen, Waffelformkörpern, mit einer Vorbereitungsanlage, insbesondere einer Backvorrichtung zum Backen von Teigrohlingen, und einer nachfolgenden Transportvorrichtung zum Weitertransport der Produkte.

Aus dem Stand der Technik sind verschiedene Produktionsanlagen zur Erzeugung von flachen Backprodukten, insbesondere Flachwaffeln bekannt. Beispielsweise ist in der WO8203969A1 eine solche Anlage gezeigt. Dabei werden beispielsweise Waffeln unter Druck ausgebacken und in einer flachen quaderförmigen Form erzeugt. Diese Waffeln werden in vielen Fällen in weitere Folge aus mehreren Schichten mit dazwischen liegenden Cremeschichten zu sogenannten Waffelblöcken kombiniert. Diese Waffelblöcke werden gegebenenfalls gekühlt und dann weiter zu geeigneten Schneidmaschinen und nachfolgenden Verpackungsmaschinen transportiert. Bei Ausfall nachgeordneter Maschinen müssen die Produkte, um einen Produktstau zu verhindern, teilweise händisch auf dem Produktionsprozess entfernt und bei Wiederaufnahme des Normalbetriebes wiederum in den Produktionsprozess eingeschleust werden.

Aus der veröffentlichten Patentanmeldung DE4013368A1 ist ein sogenannter Waffelblockzwischenspeicher bekannt. Dabei werden bei Ausfall von nachgeordneten Produktionsanlagen Waffelblöcke aus dem Produktionsprozess aus-und in einen Waffelblockzwischenspeicher eingeschleust.

Mit den heutzutage eingesetzten Hochleistungsmaschinen werden über die Backöfen große Mengen an Waffel erzeugt, die über die nachfolgenden Maschinen entsprechend zeitig verarbeitet werden müssen. Da es sich bei Waffeln um ein sensibles und zerbrechliches Produkt handelt, das möglichst frisch verpackt und ausgeliefert werden sollte, ist ein kontinuierlicher Verfahrensablauf von der Erzeugung zur Verpackung wünschenswert.

Bei Ausfall von den Backöfen nachfolgenden Vorrichtungen, wie beispielsweise von Schneidmaschinen und/oder Verpackungsmaschinen, fällt im Stand der Technik oft eine hohe Menge an Produktausschuss an, da die von den Backöfen kontinuierlich erzeugten, gebackenen Waffel oft nur unzureichend zwischengespeichert werden können. Alternativ sind parallele Waffelblockzwischenspeicher vorzusehen, die aber eine hohe Investition von finanziellen Mittel erfordern, zudem viel Platz benötigen und den Produktionsprozess erheblich verkomplizieren.

Herkömmliche Vorrichtungen sind unter anderem aus der EP 1 426 315 A1 und der DE 10 2013 216 823 A1 bekannt.

Es ist deshalb eine Aufgabe der vorliegenden Erfindung eine leistungsfähige Produktionsanlage zu verwirklichen, die einen hohen Ausschuss an Produkten vermeidet bzw. den Stand der Technik verbessert.

Diese Aufgabe wird durch eine Produktionsanlage nach Anspruch 1 gelöst.

Erfindungsgemäß ist eine Produktionsanlage zur Produktion von flachen, stapelbaren Produkten der Nahrungsmittelindustrie, besonders bevorzugt von flachen Backprodukten, mit einer Vorbehandlungsanlage, einer nachfolgend angeordneten Transporteinrichtung und einer der Transporteinrichtung nachgeordneten Nachbehandlungsanlage vorgesehen, wobei die Transporteinrichtung eine erste Übergabestation am Einlauf der Transportvorrichtung, nach der ersten Übergabestation zumindest zwei Förderbänder und nachfolgend den zumindest zwei Förderbänder eine zweite Übergabestation am Auslauf der Transportvorrichtung aufweist und die erste Übergabestation einen ersten Manipulator aufweist, durch den die Produkte übereinander aufstapel- und/oder entstapelbar sind und die zweite Übergabestation einen zweiten Manipulator aufweist, durch den die Produkte übereinander aufstapel- und/oder entstapelbar sind, so dass die Produkte in der Transportvorrichtung durch Bildung von Stapel der Produkte speicherbar sind, wobei die Transportvorrichtung als Inline-Transportvorrichtung der Produktionsanlage vorgesehen ist und eine Steuereinrichtung zur Steuerung der Manipulatoren sowie zur individuellen Ansteuerung der einzelnen Förderbänder vorgesehen ist, sodass die Förderrichtung und/oder Fördergeschwindigkeit des jeweiligen Förderbandes änderbar ist.

Als Inline-Transportvorrichtung wird definitionsgemäß eine Transportvorrichtung bezeichnet, deren Förderband und/oder Förderbänder bei störungsfreiem Betrieb der Anlage als Teil der Förderstrecke der Produkte verwendet wird/werden. Somit ist kein Bypass oder eine sonstige Umleitung der Produkte auf einen Zwischenspeicher erforderlich.

Sogenannte Microstops - das sind kurzfristige Störungen bei nachgeordneten Anlagen - können durch die vorliegende Anlage schnell und effizient abgefangen werden.

Dadurch, dass die Transportstrecke selbst als Zwischenspeicher der Produkte verwendet wird, werden Investitionskosten gespart. Vor allem wird aber Platz gespart und dies kommt den teilweise bereits sehr beengten Arbeitsplätzen in den Produktionshallen der Industrie, insbesondere der Nahrungsmittelindustrie, sehr zugute.

Durch die besondere Inline-Transportvorrichtung, die einerseits als Transportstrecke mit einzelnen Produkten und andererseits auch zur Speicherung und/oder Stapelung der Produkte verwendet werden kann, kann sehr schnell auf nachgeordnete Ausfälle reagiert werden. Es muss nicht wie im Stand der Technik üblich ein weiterer Anlagenteil aktiviert oder in die Anlage integriert, also beispielsweise herangeschoben, werden. Eine vollautomatische Kompensation von sogenannten Microstops in den nachfolgenden Anlagen ist möglich.

Nach einer besonderen Ausführungsform sind eine Einrichtung zur automatisierten Erkennung von Betriebsausfällen in der Nachbehandlungsanlage sowie eine Einrichtung zur Erfassung des Beladungszustandes des Transportbandes vorgesehen, sodass das Auf- und Entstapeln der Produkte am Transportband über die beiden Einrichtungen mit einem geeigneten Algorithmus steuerbar ist.

Durch diese Steuerung der Förderbänder können beispielsweise unterschiedliche Geschwindigkeiten beim Aufstapeln und Entstapeln der Produkte ausgeglichen und ein gleichmäßiger Produktfluss in die Nachbehandlungsanlage sicher gestellt werden.

Nach einer Ausführungsform der Erfindung ist eine Produktionsanlage zur Produktion von flachen Produkten der Nahrungsmittelindustrie, von flachen Backprodukten, insbesondere von flachen Waffelformkörpern, mit einer Backvorrichtung zum Backen von Teigrohlingen und einer nachfolgenden Transportvorrichtung zum Weitertransport der Backprodukte vorgesehen. Dabei weist die Transportvorrichtung eine erste Übergabestation am Einlauf der Transportvorrichtung, nach der ersten Übergabestation zumindest zwei Förderbänder und nachfolgend den zumindest zwei Förderbänder eine zweite Übergabestation am Auslauf der Transportvorrichtung auf. Die erste Übergabestation weist dabei einen ersten Manipulator auf, durch den die Produkte übereinander stapel- und/oder entstapelbar sind und die zweite Übergabestation weist einen zweiten Manipulator auf, durch den die Produkte übereinander stapel- und/oder entstapelbar sind, so dass die Produkte in der Transportvorrichtung durch Bildung von Stapel der Backprodukte pufferbar bzw. speicherbar sind. Ferner sind die einzelnen Förderbänder der zumindest zwei Förderbänder individuell ansteuerbar, sodass die Förderrichtung und/oder Fördergeschwindigkeit des jeweiligen Förderbandes änderbar ist.

Nach einer besonderen Ausführungsform der Produktionsanlage ist die Transportvorrichtung so eingerichtet, dass auch bei Speicherung/Pufferung der Produkte in Stapeln, bezogen auf den Produktstapel ein First-in-First-out Prinzip verwirklicht werden kann. Das bedeutet, dass zuerst gebildete Produktstapel wiederum zeitlich gesehen zuerst entstapelt und wiederum dem nachfolgenden Produktionsprozess zugeführt werden.

Durch die erfindungsgemäße Transportvorrichtung ist ein flexibler Produktpuffer realisierbar über welchen die Produkte temporär gepuffert werden können, falls eine nachfolgende Anlage kurzfristig gewartet werden muss oder aus anderen Gründen nicht verfügbar ist.

Nach einer bevorzugten Ausführungsform der Produktionsanlage sind die zumindest zwei Förderbänder als verschiebbare Förderbandmodule ausgeführt, wodurch die Länge des effektiven Gesamtförderbandes zwischen der ersten Übergabestation und der zweiten Übergabestation durch Aneinanderreihen der Förderbandmodule anpassbar ist. Durch Aneinanderreihung dieser Module ist damit ein beliebig großer Speicher realisierbar, da auf den zusätzlichen Förderbandmodulen die Produktstapel speicherbar bzw. pufferbar sind.

Nach einer besonderen beispielhaften Ausführungsform der Produktionsanlage ist es dabei von besonderem Vorteil, dass die Stapel- und/oder Entstapelmodule und/oder die Förderbandmodule jeweils im Wesentlichen ident ausgebildet sind und die Anlage in beide Seiten ohne mechanischen Umbau betrieben werden kann.

Nach einer bevorzugten Ausführungsform der Produktionsanlage ist der erste Manipulator als erste Kontakteinrichtung zur Kontaktierung, Abnahme sowie Abgabe des Produktes, insbesondere zur Ausbildung eines Produktstapels ausgebildet. Ferner ist nach einer besonderen Ausführungsform ein erster, insbesondere seitlicher, Auslegearm vorgesehen, über welchen die erste Kontakteinrichtung einerseits in der Höhe und andererseits in oder gegen die Richtung der Förderung der Backprodukte am Förderband verfahrbar ist.

Nach einer besonderen Ausführungsform der Produktionsanlage ist der Manipulator mit zwei Kontakteinrichtungen ausgeführt, sodass es möglich ist zwei Produktstapel zeitgleich zu manipulieren bzw. zu bewegen.

Nach einer besonderen Ausführungsform der Produktionsanlage ist die erste Kontakteinrichtung als Unterdruckkontakteinrichtung eingerichtet, so dass das Produkt durch die Kontakteinrichtung angesaugt werden kann. Die Kontakteinrichtung weist dabei nach einer besonderen Ausführungsform weiche Kontaktflächen auf über welche die Produkte angesaugt werden können ohne dabei beschädigt zu werden.

Nach einer besonderen Ausführungsform der Produktionsanlage ist der zweite Manipulator als zweite Kontakteinrichtung zur Kontaktierung, Abnahme sowie Abgabe des Produktes ausgebildet. Ferner ist ein zweiter, insbesondere seitlicher, Auslegearm vorgesehen, über welchen die zweite Kontakteinrichtung einerseits in der Höhe und andererseits in oder gegen die Richtung der Förderung der Produkte verfahrbar ist.

Nach einer besonderen Ausführungsform der Produktionsanlage ist die zweite Kontakteinrichtung als Unterdruckkontakteinrichtung eingerichtet, so dass das Produkt durch die Kontakteinrichtung angesaugt werden kann. Die Kontakteinrichtung weist dabei nach einer besonderen Ausführungsform weiche Kontaktflächen auf über welche die Produkte angesaugt werden können ohne dabei beschädigt zu werden.

Nach einer besonderen Ausführungsform der Produktionsanlage weist die Transportvorrichtung zumindest ein Aufzugsband auf, wobei das Aufzugsband so eingerichtet ist, dass es die Produkte in, im Wesentlichen, vertikaler Richtung zu einer definierten zweiten vertikalen Position transportieren kann. Nach einer weiteren Ausführungsform ist im Anschluss an das Aufzugsband an der zweiten vertikalen Position ein weiteres im Wesentlichen horizontales Förderband vorgesehen, das als weiterer Produktspeicher und damit als Erweiterung der Kapazität verwendet werden kann.

Nach einer besonderen Ausführungsform der Produktionsanlage ist an der Transportvorrichtung eine Kühl- und/oder Temperier- und/oder Entfeuchtungs- und/oder eine andere Schutzeinrichtung vorgesehen, so dass die Produkte beispielsweise gekühlt und/oder entfeuchtet bzw. trocken gehalten werden können.

Nach einer besonderen Ausführungsform der Produktionsanlage ist eine Steuereinrichtung vorgesehen, durch welche die Aktivität der Manipulatoren der Übergabestationen sowie die Förderbänder in Richtung und Geschwindigkeit gesteuert werden kann.

Nach einer besonderen Ausführungsform der Produktionsanlage ist die Steuereinrichtung mit zumindest einem an einer der Transportvorrichtung nachfolgenden Nachbehandlungseinrichtung angeordneten Sensor verbunden, wobei der Sensor den Betriebszustand der Nachbehandlungseinrichtung bestimmt, sodass die Aktivität der Manipulatoren der Übergabestationen sowie die Förderbänder in Richtung und Geschwindigkeit in Abhängigkeit des Betriebszustandes der nachfolgenden Nachbehandlungseinrichtung über die Steuereinrichtung gesteuert werden kann.

Nach einer besonderen Ausführungsform ist die Produktionsanlage dadurch gekennzeichnet, dass die Produkte als Hohl- oder Flachwaffeln ausgebildet sind und die Vorbehandlungsanlage einen Durchlaufbackofen zum kontinuierlichen Backen der Hohl-oder Flachwaffeln und die Nachbehandlungsanlage eine Schneidvorrichtung zum Schneiden der Hohl- oder Flachwaffeln aufweist. Als Durchlaufbackofen werden Öfen bezeichnet in denen Waffeln in sogenannten Backzangen im Durchlauf gebacken werden. Solche Öfen weisen einen großen Austrag von gebackenen Waffeln auf.

Insbesondere bei der Produktion von Hohl- oder Flachwaffeln sind hohe Anforderungen an die zeitgerechte Verarbeitung der Hohl- oder Flachwaffeln gegeben. Da Waffeln im Allgemeinen einen niedrigen Feuchtigkeitsgehalt aufweisen und deshalb hygroskopisch sind, muss die Zeit während der die Waffeln unverpackt bzw. der Atmosphäre ausgesetzt sind, minimiert werden. Durch verschiedene Merkmale der vorliegenden Entwicklung kann einerseits der Ausschuss reduziert und andererseits die Produktionszeit der Waffeln, insbesondere bevor diese verpackt werden, minimiert werden.

Ebenfalls ist die vorliegende Erfindung durch ein Verfahren nach Anspruch 8 gekennzeichnet.

Nach einer besonderen Ausführungsform des Verfahrens sind die zumindest zwei Förderbänder zumindest zwei unabhängig voneinander steuerbare Förderbänder. Ferner werden im Betrieb die Förderrichtung und/oder die Geschwindigkeit der Förderbänder gewechselt und/oder geändert.

Nach einer besonderen Ausführungsform des Verfahrens sind eine Steuereinrichtung und ein mit der Steuereinrichtung verbundener und an einer der Transportvorrichtung nachfolgenden Nachbehandlungseinrichtung angeordneter Sensor vorgesehen, wobei der Sensor den Betriebszustand der Nachbehandlungseinrichtung bestimmt, und die Aktivität der Manipulatoren der Übergabestationen sowie die Förderbänder in Richtung und/oder Geschwindigkeit in Abhängigkeit des Betriebszustandes der nachfolgenden Nachbehandlungseinrichtung über die Steuereinrichtung gesteuert und/oder geregelt werden.

Nach einer möglichen Ausführungsform des Verfahrens stapelt bei Detektion einer Störung in der Nachbehandlungsanlage der erste Manipulator die von der Vorbehandlungsanlage an der ersten Übergabestation eintreffenden Produkte auf. Die bereits auf den Förderbändern befindlichen Produkte werden durch die Förderbänder zum zweiten Manipulator transportiert, um durch den zweiten Manipulator aufgestapelt zu werden.

Nach einer besonderen Ausführungsform ist die vorliegende Entwicklung bzw. Erfindung durch ein Verfahren zur Speicherung bzw. Pufferung von flachen Produkten, insbesondere Produkten der Lebensmittelindustrie, vorzugsweise von flachen Backprodukten, insbesondere Flachwaffeln, zur Verwendung in einer erfindungsgemäßen Produktionsanlage gekennzeichnet. Dabei werden die Produkte zu der ersten Übergabestation gefördert, nachfolgend durch den ersten Manipulator zu einem Stapel gestapelt, danach durch die zumindest zwei Förderbänder zu der zweiten Übergabestation gefördert und schließlich in der zweiten Übergabestation wiederum von dem Stapel vereinzelt um weiter transportiert zu werden.

Nach einer besonderen Ausführungsform des Verfahrens sind die zumindest zwei Förderbänder in der Transporteinrichtung als zumindest zwei unabhängig voneinander steuerbare Förderbänder vorgesehen, deren Förderrichtung und/oder Förderbandgeschwindigkeit im Betrieb gewechselt und/oder verändert wird.

Erfindungsgemäß ist die Erfindung durch ein Verfahren zur Pufferung bzw. Speicherung von flachen, stapelbaren Produkten zur Verwendung in einer Produktionsanlage nach einer der Ansprüche 1 bis zur Produktion von flachen, stapelbaren Produkten der Nahrungsmittelindustrie, besonders bevorzugt von flachen Backprodukten, insbesondere von flachen Waffelformkörpern gekennzeichnet.

Nach einer besonderen Ausführungsform der Erfindung weist die Produktionsanlage dabei eine Vorbereitungsanlage, insbesondere einer Backvorrichtung zum Backen von Teigrohlingen, und einer nachfolgenden Transportvorrichtung zum Weitertransport der Produkte auf. Die Transportvorrichtung weist dabei eine erste Übergabestation am Einlauf der Transportvorrichtung, nach der ersten Übergabestation zumindest zwei Förderbänder und nachfolgend den zumindest zwei Förderbänder eine zweite Übergabestation am Auslauf der Transportvorrichtung auf. Die erste Übergabestation weist einen ersten Manipulator und die zweite Übergabestation einen zweiten Manipulator auf. Die Produkte werden zu der ersten Übergabestation gefördert und nachfolgend durch den ersten Manipulator zu einem Stapel gestapelt. Danach wird der Stapel durch die zumindest zwei Förderbänder zu der zweiten Übergabestation gefördert. In der zweiten Übergabestation wird der Produktstapel wiederum entstapelt bzw. die Produkte vereinzelt.

Nach einer Ausführungsform des Verfahrens weisen die zumindest zwei Förderbänder zumindest zwei unabhängig voneinander steuerbare Förderbänder auf und werden im Betrieb die Förderrichtung und/oder die Geschwindigkeit der Förderbänder gewechselt und/oder geändert.

Nach einer Ausführungsform des Verfahrens sind eine Steuereinrichtung und ein mit der Steuereinrichtung verbundener und an einer der Transportvorrichtung nachfolgenden Nachbehandlungseinrichtung angeordneter Sensor vorgesehen, wobei der Sensor den

Betriebszustand der Nachbehandlungseinrichtung bestimmt, und die Aktivität der Manipulatoren der Übergabestationen sowie die Förderbänder in Richtung und/oder Geschwindigkeit in Abhängigkeit des Betriebszustandes der nachfolgenden Nachbehandlungseinrichtung über die Steuereinrichtung gesteuert und/oder geregelt werden.

Nach weiteren Ausführungsformen des Verfahrens entstapelt der zweite Manipulator, bei auf der Transportvorrichtung befindlichen gestapelten Produkten, schneller, als der erste Manipulator die eingehenden Produkte, insbesondere zumindest teilweise zeitgleich, aufstapelt. Nach einer besonderen Ausführungsform entstapelt der zweite Manipulator die Produkte mindestens 10% schneller, bevorzugt mindestens 20% schneller, als der erste Manipulator die Produkte, insbesondere zumindest teilweise zeitgleich, aufstapelt.

Durch diese Maßnahme ist gewährleistet, dass nach einem überwundenen Störfall der Anlage die in Stapel gespeicherten Produkte in der Transportvorrichtung wieder abgebaut und damit die Produktionsanlage in einem normalen Betriebszustand übergeführt werden kann. In diesem normalen Betriebszustand wird die Transportvorrichtung, wie erläutert als Transportvorrichtung mit einzelnen Produkten je Förderbandmodul verwendet.

Durch das schnellere Entstapeln der Produkte kann die Transportstrecke von Produktstapel schneller geleert werden. Das Entstapeln am Ende der Transportstrecke erfolgt während der erste Manipulator am Eingang der Förderstrecke und/oder an der ersten Übergabestation die Produkte gegebenenfalls noch aufstapelt.

Die Erfindung wird nachfolgend anhand verschiedener nicht einschränkender Ausführungsformen mittels schematischer Zeichnungen erläutert.
Fig. 1 zeigt eine schematische vereinfachte Ansicht einer erfindungsgemäßen Produktionsanlage eines flachen Backproduktes
Fig. 2 zeigt eine Transportvorrichtung zur Verwendung in einer Produktionsanlage
Fig. 3a-3c zeigen Transportvorrichtungen zur Verwendung in einer Produktionsanlage in verschiedenen Zuständen
Fig. 4 zeigt eine Transportvorrichtung mit modularen Förderbandmodulen
Fig. 5 zeigt eine Transportvorrichtung mit vertikalen Förderaufzügen
Fig. 6 zeigt einen schematisch vereinfachten Manipulator einer Übergabestation einer Transportvorrichtung
Fig. 7 zeigt eine weitere Ausführungsform eines schematisch vereinfachten Manipulators einer Übergabestation einer Transportvorrichtung

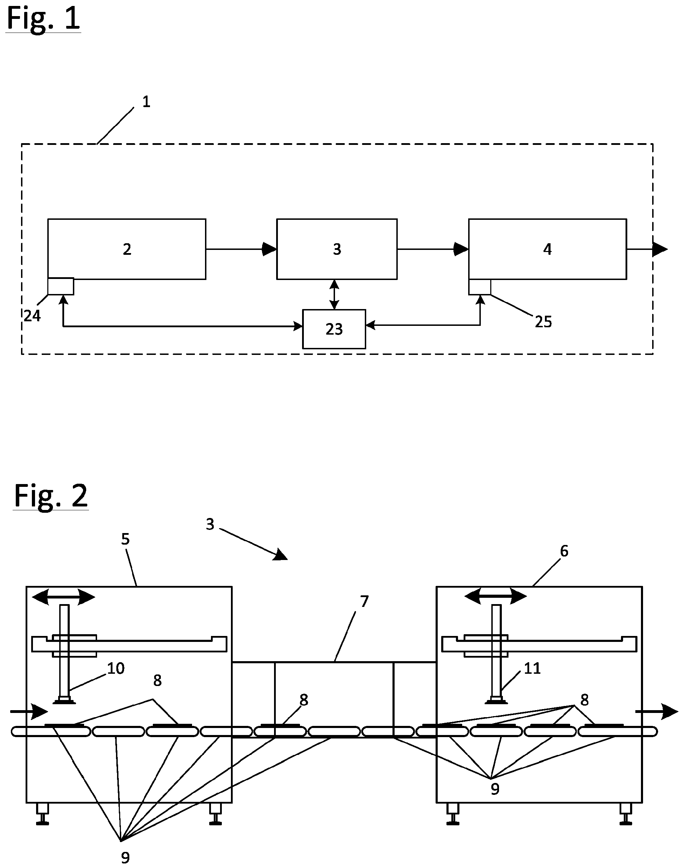

In Fig. 1 ist eine schematische Übersicht einer Produktionsanlage 1 zur Erzeugung von flachen Waffelformkörpern gezeigt. Dabei werden aus Teigrohlingen in einer Vorbereitungsanlage 2, insbesondere einem Backofen 2, Waffeln gebacken und gegebenenfalls entsprechende Waffelblöcke aus mehreren Waffeln zusammengesetzt. In einem nächsten Schritt werden diese Waffelblöcke und/oder Waffelblätter dann durch eine Transportvorrichtung 3 zu einer Nachbehandlungseinrichtung 4, beispielsweise einer Schneidmaschine, zugeführt. Nach einer besonderen Ausführungsform ist eine Steuereinheit 23 vorgesehen, welche die Transportvorrichtung steuert. Über schematisch dargestellte Sensoren und/oder Überwachungseinheiten 24, 25 kann der Zustand des Backofens 2 und/oder der Nachbehandlungseinrichtung 4 überwacht werden. Entsprechend kann, beispielsweise bei Ausfall und/oder geringerer Leistung der Nachbehandlungseinrichtung 4, beispielsweise der Schneid- und/oder Verpackungseinrichtung, die Leistung der Transportvorrichtung 3 angepasst werden. Diese Leistungsanpassung kann beispielsweise durch Ausbildung von Produktstapeln in der Transporteinrichtung erfolgen, sodass der Durchsatz der Transporteinrichtung geändert wird. Auf diese Weise kann beispielsweise die Transporteinrichtung die Produkte die aus dem Backofen eintreffen zwischenspeichern und zeitversetzt an die nachfolgende Nachbehandlungseinrichtung ausgeben.

In Fig. 2 ist eine schematische Ansicht einer Transportvorrichtung 3 gezeigt. Darin ersichtlich sind eine erste Übergabestation 5, eine zweite Übergabestation 6 und ein Zwischenbereich 7. Das Produkt 8, beispielsweise die Flachwaffel, wird über eine Förderstrecke von der ersten zu der zweiten Übergabestation transportiert, die aus mehreren Förderbändern 9 zusammengesetzt ist.

Schematisch werden zwei Manipulatoren gezeigt. Die beiden Manipulatoren sind dabei zur Aufnahme der Produkte eingerichtet. Jeder Manipulator kann dabei in Richtung der Förderrichtung der Förderbänder oder gegen die Richtung der Förderrichtung der Förderbänder verfahren werden. Das ist durch schematische Pfeile in Fig. 2 angedeutet. Der Manipulator ist zudem höhenverstellbar, so dass der Manipulator die Produkte vom Förderband abnehmen und/oder auf dieses ablegen kann. Ein erster Manipulator 10 in der ersten Übergabestation 5 ist dabei zur Abnahme und Abgabe des Produktes 8 von dem Förderband 9 einrichtet, so dass das Produkt 8 auf dem Förderband 9 ge- und entstapelt werden kann. Ebenso ist ein zweiter Manipulator 11 in der ersten Übergabestation 6 dabei zur Abnahme und Abgabe des Produktes 8 von dem Förderband 9 einrichtet, so dass das Produkt 8 auch durch den zweiten Manipulator 11 auf dem Förderband 9 ge- und entstappelt werden kann. Nach einer besonderen Ausführungsform ist es möglich die Anzahl der Manipulatoren pro Station zu vervielfachen, so dass zeitgleich je Station mehrere Manipulatoren arbeiten.

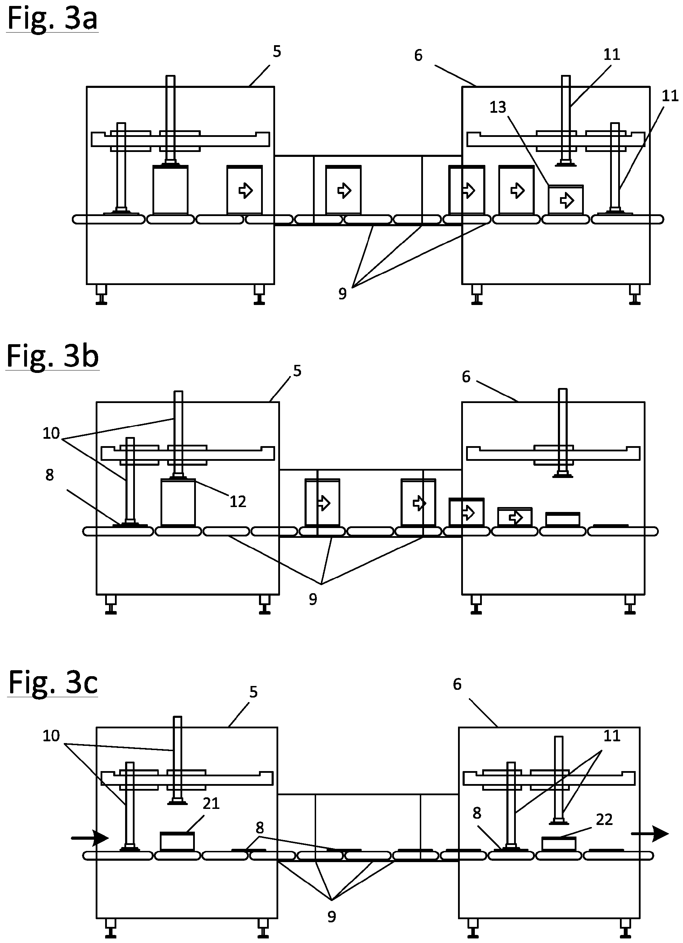

In den Fig. 3a bis 3c sind verschiedene Zustände einer Transportvorrichtung 3 gezeigt. Wie in Fig. 3c ersichtlich, ist dabei, der Einfachheit halber, der erste Manipulator 10 der ersten Übergabestation 5 in zwei verschiedenen Zuständen und deshalb doppelt in der Figur gezeigt. Einerseits in einer ersten Position auf der linken Seite, in welcher der Manipulator bereit zur Aufnahme eines Produktes 8 ist und andererseits in einer zweiten Position rechts daneben, wobei sich der Manipulator in einer Position nach der Ablage des Produktes 8 auf einen Produktstapel 21 befindet. Ebenso wird der Manipulator 11 der zweiten Übergabestation 6 in zwei verschiedenen Zuständen und deshalb doppelt in der Figur gezeigt. Der Manipulator 11 ist in seiner Position links bei der Aufnahme eines Produktes 8 gezeigt, während der Manipulator 11 in der Position rechts davon nach der Ablage des Produktes 8 auf den Stapel 22 gezeigt ist. Fig. 3c stellt dabei beispielsweise den Zustand nach einem Ausfall einer nachfolgenden Anlage, beispielsweise einer Schneidanlage dar. An der ersten Übergabestation 5 treffen weiterhin neue Produkte 8 ein, da der Backofen als kontinuierlich produzierender Anlagenteil nicht einfach abgestellt werden kann. Während an der ersten Übergabestation 5 Stapel zur Aufnahme der neuen eintreffenden Produkte gebildet werden, wird die zweite Übergabestation 6 dazu verwendet, die auf der Förderstrecke zwischen den beiden Übergabestationen befindlichen Produkte zu stapeln. Dazu werden die Produkte 8, die zwischen der ersten und der zweiten Übergabestation positioniert sind über die Förderbänder 9 zur zweiten Übergabestation 6 transportiert, wo diese durch den zweiten Manipulator 11 gestapelt werden. Auf diese Weise wird die Förderstrecke zwischen den beiden Übergabestationen geleert, so dass die gestapelten Produkte aus der ersten Übergabestation 5 durch die Förderbänder 9 in diesen Bereich transportiert werden können und damit die Transportstrecke in idealer Weise als Puffer- bzw. Speicherstrecke verwendet werden kann.

In Fig. 3b ist ein solcher Zustand schematisch dargestellt. Die durch die Übergabestation 5 erzeugten Stapel werden dabei durch die Förderbänder 9 zur zweiten Übergabestation transportiert und belegen damit einen Teil der Förderstrecke zwischen den beiden Übergabestationen. Der erste Manipulator 10 ist dabei in einer ersten Position links dargestellt, in welcher er ein Produkt 8 aufnimmt und in einer zweiten Position rechts dargestellt, in welcher er ein aufgenommenes Produkt 8 auf einem Stapel 12 ablegt.

Schließlich ist in Fig. 3c ersichtlich, wie der zweite Manipulator 11 den Stapel 13 wiederum abbaut, also die Produkte 8 vom Stapel 13 abnimmt und wieder vereinzelt auf das Förderband 9 zum Abtransport ablegt. Auf diese Weise kann der Speicher bzw. Puffer bei Anfahren der nachfolgenden Anlage, beispielsweise der Schneideinrichtung wieder abgebaut werden.

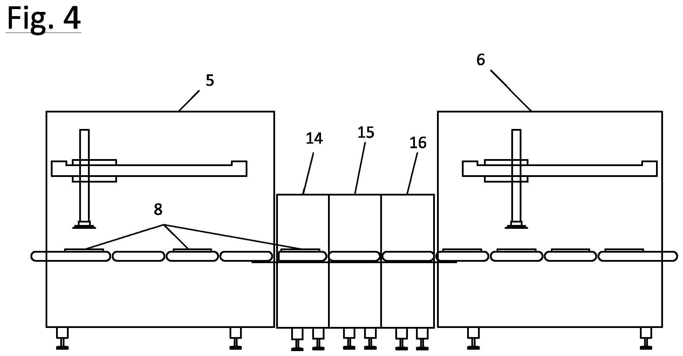

In Fig. 4 ist eine Ausführungsform ersichtlich, in welcher das Förderband im Bereich der Förderstrecke zwischen den beiden Übergabestationen modular aufgebaut ist. Die einzelnen Förderbandsegmente 14, 15, 16 können damit als einzelne Module in die Anlage insbesondere eingeschoben werden. Durch diese modulare Bauweise und die flexible Positionierung der beiden Übergabestationen kann die Förderstrecke und damit auch die Kapazität des Puffers beliebig angepasst werden. Die einzelnen Förderbandsegmente sind nach einer besonderen Ausführungsform getrennt ansteuerbar, so dass die Geschwindigkeit der Förderbänder und/oder die Förderrichtung der Förderbänder steuerbar sind.

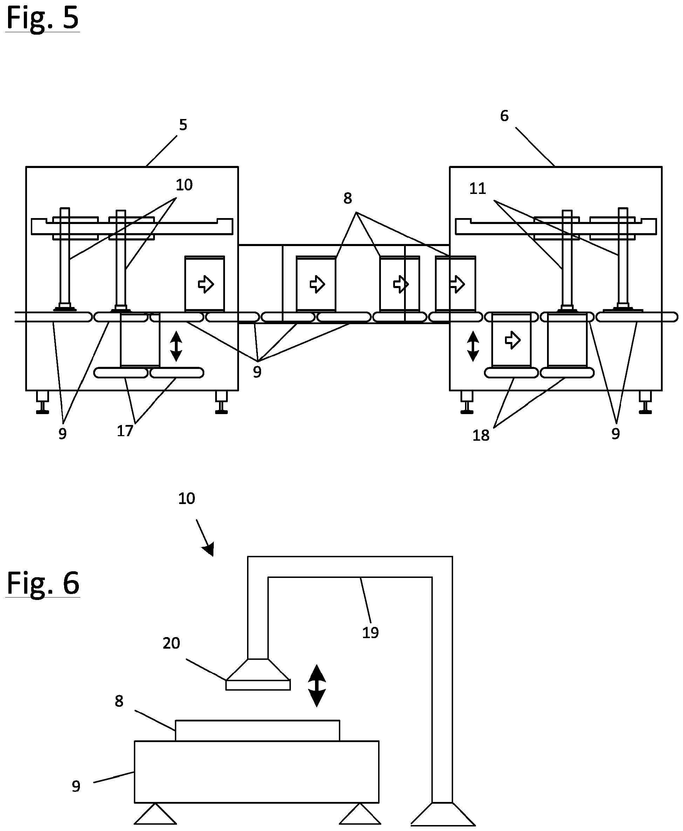

Die in Fig. 5 dargestellte Ausführungsform unterscheidet sich von den vorangegangenen Ausführungsformen darin, dass sogenannte Aufzugsbänder vorgesehen sind, wodurch die Stapel aufzugsgleich auf eine andere horizontale Ebene geführt werden. Das ist in Fig. 5 schematisch durch Transportbänder 17, 18 auf einer unterschiedlichen Ebene angedeutet. Die Aufzugsbänder, die die Produkte von den Transportbändern 9 auf die Transportbänder 17, 18 und wiederum zurück auf die Transportbänder 9 fördert, sind dem Fachmann aus dem Stand der Technik vielfach bekannt und werden aus diesem Grund hier nicht weiter beschrieben. Durch die tiefer gestellten Transportbänder kann befindet sich das oberste Produkt am Stapel auf einer Ebene die vertikal gesehen näher an der Oberfläche der Transportbänder 9 ist, als wenn der Produktstapel auf eben diesen Transportbändern 9 platziert wäre. Damit ist durch den Manipulator beim Auf- oder Entstapeln von Produkten vom Transportband 9 auf das Transportband 17, 18 ein geringerer Höhenunterschied zu überwinden. Auf diese Weise kann Zeit eingespart werden bzw. die Leistung der Anzahl von gestapelten Produkten pro Zeiteinheit gesteigert werden.

Schließlich ist in Fig. 6 eine schematische Ansicht eines Manipulators dargestellt, wobei als Ansicht gegenüber den vorangegangenen Ansicht eine Perspektive gegen die primäre Förderrichtung der Produkte gewählt wurde. Es ist in dieser Ansicht ersichtlich, dass der Manipulator über einen seitlichen Auslegearm 19 verfügt, der über das Förderband 9 reicht. Der Manipulator weist eine Unterdruckkontakteinrichtung 20 auf, durch welche das Backprodukt angesaugt und durch den Manipulator aufgenommen und gegebenenfalls an anderer Stelle wieder abgegeben werden kann. Zur Erzeugung des Unterdrucks kann beispielsweise eine einfache Unterdruckpumpe verwendet werden. Die beispielsweise in Art einer Saugglocke ausgeführte Unterdruckkontakteinrichtung weist weiche Kontaktflächen auf um die Oberfläche des Produktes nicht zu beschädigen. Nach möglichen weiteren Ausführungsformen der Erfindung sind mechanische Lösungen zum Auf- und Abnehmen der Produkte am Manipulator vorgesehen. Beispielsweise können geeignete mechanische Greifer, beispielsweise über Pneumatikzylinder betätigbar, vorgesehen sein, die insbesondere bei mit Creme beaufschlagter Oberfläche der Produkte saugenden Systemen vorzuziehen sind.

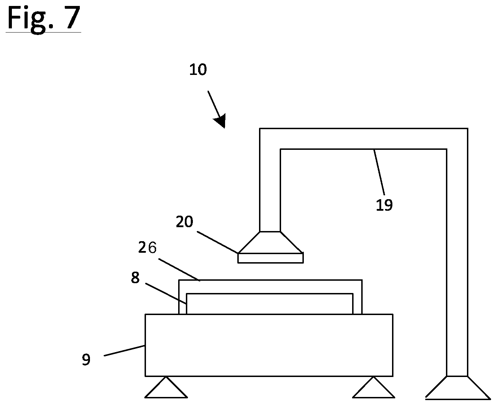

Fig. 7 zeigt die Ausgestaltung nach Fig. 6, wobei zusätzlich eine Kühl- und/oder Entfeuchtungseinrichtung 26 vorgesehen ist. Die Kühl- und/oder Temperier- und/oder Entfeuchtungseinrichtung 26, die im einfachsten Fall als Abdeckhaube (wie in Fig. 7 schematisch dargestellt) oder Abdeckplatte ausgestaltet ist, wird durch den Manipulator auf die Produkte aufgesetzt und schützt die Produkte vor einem Auskühlen (wenn warm) und/oder einem Erwärmen (wenn kalt) und/oder anderen Umwelteinflüssen, beispielsweise vor der Aufnahme von Feuchtigkeit, wie dies bei Waffeln der Fall ist. Vor dem Entstapeln wird die Kühl- und/oder Temperier- und/oder Entfeuchtungseinrichtung 26 wiederum entfernt und beispielsweise auf einen vertikal und/oder seitlich von der Transporteinrichtung angeordneten Ablageplatz (nicht dargestellt) abgelegt.

## Patentansprüche

1. Produktionsanlage (1) zur Produktion von flachen, stapelbaren Produkten (8) der Nahrungsmittelindustrie, besonders bevorzugt von flachen Backprodukten, mit einer Vorbehandlungsanlage, einer nachfolgend angeordneten Transporteinrichtung bzw. Transportvorrichtung (3) und einer der Transporteinrichtung nachgeordneten Nachbehandlungsanlage (4), wobei die Transporteinrichtung eine erste Übergabestation (5) am Einlauf der Transportvorrichtung (3), nach der ersten Übergabestation (5) zumindest zwei Förderbänder (9) und nachfolgend den zumindest zwei Förderbänder (9) eine zweite Übergabestation (6) am Auslauf der Transportvorrichtung (3) aufweist und die erste Übergabestation (5) einen ersten Manipulator (10) aufweist, durch den die Produkte (8) übereinander aufstapel- und/oder entstapelbar sind und die zweite Übergabestation (6) einen zweiten Manipulator (11) aufweist, durch den die Produkte (8) übereinander aufstapel- und/oder entstapelbar sind, so dass die Produkte (8) in der Transportvorrichtung (3) durch Bildung von Stapel (12, 13, 22) der Produkte (8) speicherbar sind,
**dadurch gekennzeichnet, dass** die Transportvorrichtung (3) als Inline-Transportvorrichtung (3) der Produktionsanlage (1) vorgesehen ist und eine Steuereinrichtung zur Steuerung der Manipulatoren (10, 11) sowie zur individuellen Ansteuerung der einzelnen Förderbänder (9) vorgesehen ist, sodass die Förderrichtung und/oder Fördergeschwindigkeit des jeweiligen Förderbandes (9) änderbar ist.

2. Produktionsanlage (1) nach Anspruch 1, durch gekennzeichnet, dass eine Einrichtung zur automatisierten Erkennung von Betriebsausfällen in der Nachbehandlungsanlage (4) sowie eine Einrichtung zur Erfassung des Beladungszustandes eines Transportbandes vorgesehen sind, sodass über die beiden Einrichtungen mit einem geeigneten Algorithmus das Auf- und Entstapeln der Produkte (8) am Transportband steuerbar ist.

3. Produktionsanlage (1) nach einem der Ansprüche 1 oder 2, **dadurch gekennzeichnet, dass** die zumindest zwei Förderbänder (9) als verschiebbare Förderbandmodule ausgeführt sind, wodurch die Länge des effektiven Gesamtförderbandes zwischen der ersten Übergabestation (5) und der zweiten Übergabestation (6) durch Aneinanderreihen der Förderbandmodule anpassbar ist.

4. Produktionsanlage (1) nach Anspruch 3, **dadurch gekennzeichnet, dass** eines der Förderbandmodule der Transportvorrichtung (3) ein Aufzugsband aufweist, wobei das Aufzugsband so eingerichtet ist, dass es die Produkte (8) in, im Wesentlichen, vertikaler Richtung auf eine andere Transportebene transportieren kann.

5. Produktionsanlage (1) nach einem der vorhergehenden Ansprüche, **dadurch gekennzeichnet, dass** an der Transportvorrichtung (3) eine Kühl- und/oder Temperier-, Entfeuchtungs- und/oder Schutzeinrichtung vorgesehen ist, so dass die Produkte (8) beispielsweise gekühlt und/oder entfeuchtet bzw. trocken gehalten werden können.

6. Produktionsanlage (1) nach einem der vorhergehenden Ansprüche, **dadurch gekennzeichnet, dass** die Steuereinrichtung mit zumindest einem an einer der Transportvorrichtung (3) nachfolgenden Nachbehandlungseinrichtung (4) angeordneten Sensor verbunden ist, wobei der Sensor den Betriebszustand der Nachbehandlungseinrichtung (4) misst, sodass die Aktivität der Manipulatoren (10, 11) der Übergabestationen (5, 6) sowie die Förderbänder (9) in Richtung und Geschwindigkeit in Abhängigkeit des Betriebszustandes der nachfolgenden Nachbehandlungseinrichtung (4) über die Steuereinrichtung steuerbar ist.

7. Produktionsanlage (1) nach einem der vorhergehenden Ansprüche, **dadurch gekennzeichnet, dass** die Produkte (8) als Hohl- oder Flachwaffeln ausgebildet sind und die Vorbehandlungsanlage einen Durchlaufbackofen zum kontinuierlichen Backen der Hohl-oder Flachwaffeln und die Nachbehandlungsanlage (4) eine Schneidvorrichtung zum Schneiden der Hohl- oder Flachwaffeln aufweist.

8. Verfahren zur Pufferung bzw. Speicherung von flachen, stapelbaren Produkten (8) zur Verwendung in einer Produktionsanlage (1) nach einem der Ansprüche 1 bis 7 zur Produktion von flachen, stapelbaren Produkten (8) der Nahrungsmittelindustrie, besonders bevorzugt von flachen Backprodukten, mit einer Vorbehandlungsanlage, einer nachfolgend angeordneten Transporteinrichtung bzw. Transportvorrichtung (3) und einer der Transporteinrichtung nachgeordneten Nachbehandlungsanlage (4), wobei die Transporteinrichtung eine erste Übergabestation (5) am Einlauf der Transportvorrichtung (3), nach der ersten Übergabestation (5) zumindest zwei Förderbänder (9) und nachfolgend den zumindest zwei Förderbänder (9) eine zweite Übergabestation (6) am Auslauf der Transportvorrichtung (3) aufweist und die erste Übergabestation (5) einen ersten Manipulator (10) aufweist, durch den die Produkte (8) übereinander aufstapel- und/oder entstapelbar sind und die zweite Übergabestation (6) einen zweiten Manipulator (11) aufweist, durch den die Produkte (8) übereinander aufstapel- und/oder entstapelbar sind, so dass die Produkte (8) in der Transportvorrichtung (3) durch Bildung von Stapel (12, 13, 21, 22) der Produkte (8) speicherbar sind,
**dadurch gekennzeichnet, dass** die Transportvorrichtung (3) als Inline-Transportvorrichtung der Produktionsanlage (1) vorgesehen ist und eine Steuereinrichtung zur Steuerung der Manipulatoren (10, 11) sowie zur individuellen Ansteuerung der einzelnen Förderbänder (9) vorgesehen ist, sodass die Förderrichtung und Fördergeschwindigkeit des jeweiligen Förderbandes (9) änderbar ist, wobei im Normalbetrieb die Produkte (8) von der Vorbehandlungsanlage zur ersten Übergabestation (5) und von dort in vereinzelter Form über die Transportbänder und die zweite Übergabestation (6) zur Nachbehandlungsanlage (4) geführt werden.

9. Verfahren nach Anspruch 8, **dadurch gekennzeichnet, dass** die zumindest zwei Förderbänder (9) zumindest zwei unabhängig voneinander steuerbare Förderbänder (9) aufweisen und im Betrieb die Förderrichtung und/oder die Geschwindigkeit der Förderbänder (9) gewechselt und/oder geändert werden.

10. Verfahren nach Anspruch 8 oder 9, **dadurch gekennzeichnet, dass** eine Steuereinrichtung und ein mit der Steuereinrichtung verbundener und an einer der Transportvorrichtung (3) nachfolgenden Nachbehandlungseinrichtung (4) angeordneter Sensor vorgesehen sind, wobei der Sensor den Betriebszustand der Nachbehandlungseinrichtung (4) bestimmt, und die Aktivität der Manipulatoren (10, 11) der Übergabestationen (5, 6) sowie die Förderbänder (9) in Richtung und Geschwindigkeit in Abhängigkeit des Betriebszustandes der nachfolgenden Nachbehandlungseinrichtung (4) über die Steuereinrichtung gesteuert und/oder geregelt werden.

11. Verfahren nach einem der Ansprüche 8 bis 10, **dadurch gekennzeichnet, dass** bei Detektion einer Störung in der Nachbehandlungsanlage (4) der erste Manipulator (10) die von der Vorbehandlungsanlage an der ersten Übergabestation (5) eintreffenden Produkte (8) aufstapelt und die bereits auf den Förderbändern (9) befindlichen Produkte durch die Förderbänder (9) zum zweiten Manipulator (11) transportiert werden, um durch den zweiten Manipulator (11) aufgestapelt zu werden.

12. Verfahren nach einem der Ansprüche 8 bis 11, **dadurch gekennzeichnet, dass** bei auf der Transportvorrichtung (3) befindlichen gestapelten Produkten (8) zur Entstapelung der Produkte (8) der zweite Manipulator (11) schneller entstapelt als der erste Manipulator (10) die eingehenden Produkte (8) aufstapelt.

13. Verfahren nach Anspruch 12, **dadurch gekennzeichnet, dass** der zweite Manipulator (11) die Produkte (8) mindestens 10% schneller, bevorzugt mindestens 20%, entstapelt, als der erste Manipulator (10) die Produkte (8) aufstapelt.

## Claims

1. A production plant (1) for producing flat, stackable products (8) of the food industry, particularly preferably flat bakery products, with a pre-treatment plant, a transport means/transport device (3) downstream thereof and a post-treatment plant (4) downstream of the transport means, wherein the transport means has a first transfer station (5) at the inlet of the transport device (3), at least two conveyor belts (9) downstream of the first transfer station (5) and, downstream of the at least two conveyor belts (9), a second transfer station (6) at the outlet of the transport device (3), and wherein the first transfer station (5) has a first manipulator (10), by which the products (8) can be stacked one on top of the other and/or unstacked, and wherein the second transfer station (6) has a second manipulator (11), by which the products (8) can be stacked one on top of the other and/or unstacked so that the products (8) can be stored in the transport device (3) by forming stacks (12, 13, 22) of the products (8),
**characterized in that** the transport device (3) is provided as an in-line transport device (3) of the production plant (1) and **in that** a control means for controlling the manipulators (10, 11) and for individually actuating the individual conveyor belts (9) is provided so that the conveying direction and/or conveying speed of the respective conveyor belt (9) can be changed.

2. The production plant (1) according to claim 1, **characterized in that** a means for the automatic identification of service interruptions in the post-treatment plant (4) and a means for the detection of the load condition of a transport belt are provided so that the stacking and unstacking of the products (8) on the transport belt can be controlled via the two means with a suitable algorithm.

3. The production plant (1) according to one of claims 1 or 2, **characterized in that** the at least two conveyor belts (9) are configured as slidable conveyor belt modules so that the length of the effective total conveyor belt between the first transfer station (5) and the second transfer station (6) can be adapted by lining up the conveyor belt modules.

4. The production plant (1) according to claim 3, **characterized in that** one of the conveyor belt modules of the transport device (3) has a pull-up belt, wherein the pull-up belt is configured to be able to transport the products (8) in a substantially vertical direction to another transport plane.

5. The production plant (1) according to any of the preceding claims, **characterized in that** a cooling and/or temperature control, dehumidification and/or protection means is provided on the transport device (3) so that the products (8) may be kept cool and/or dehumidified/dry, for example.

6. The production plant (1) according to any of the preceding claims, **characterized in that** the control means is connected to at least one sensor arranged on a post-treatment plant (4) downstream of the transport device (3), wherein the sensor measures the operating state of the post-treatment means (4) so that the activity of the manipulators (10, 11) of the transfer stations (5, 6) and the direction and speed of the conveyor belts (9) can be controlled by the control means depending on the operating state of the post-treatment plant (4) downstream.

7. The production plant (1) according to any of the preceding claims, **characterized in that** the products (8) are designed as hollow or flat wafers and **in that** the pre-treatment plant has a continuous baking oven for continuously baking the hollow or flat wafers and **in that** the post-treatment plant (4) has a cutting device for cutting the hollow or flat wafers.

8. A method for buffering/storing flat, stackable products (8) for use in a production plant (1) according to one of claims 1 to 7 for producing flat, stackable products (8) of the food industry, particularly preferably flat bakery products, with a pre-treatment plant, a transport means/transport device (3) downstream thereof, and a post-treatment plant (4) downstream of the transport means, wherein the transport means has a first transfer station (5) at the inlet of the transport device (3), at least two conveyor belts (9) downstream of the first transfer station (5) and, downstream of the at least two conveyor belts (9), a second transfer station (6) at the outlet of the transport device (3), and wherein the first transfer station (5) has a first manipulator (10), by which the products (8) can be stacked one on top of the other and/or unstacked, and wherein the second transfer station (6) has a second manipulator (11), by which the products (8) can be stacked one on top of the other and/or unstacked so that the products (8) can be stored in the transport device (3) by forming stacks (12, 13, 21, 22) of the products (8),
**characterized in that** the transport device (3) is provided as an in-line transport device (3) of the production plant (1) and **in that** a control means for controlling the manipulators (10, 11) and for individually actuating the individual conveyor belts (9) is provided so that the conveying direction and/or conveying speed of the respective conveyor belt (9) can be changed, wherein, during normal operation, the products (8) are guided from the pre-treatment plant to the first transfer station (5) and from there individually to the post-treatment plant (4) via the transport belts and the second transfer station (6).

9. The method according to claim 8, **characterized in that** the at least two conveyor belts (9) have at least two independently controllable conveyor belts (9) and **in that** the conveying direction and/or the speed of the conveyor belts (9) can be switched and/or changed during operation.

10. The method according to claim 8 or 9, **characterized in that** a control means and a sensor connected to the control means and arranged on a post-treatment means (4) downstream of the transport device (3) are provided, wherein the sensor determines the operating state of the post-treatment means (4) and wherein the activity of the manipulators (10, 11) of the transfer stations (5, 6) and the direction and speed of the conveyor belts (9) are controlled and/or regulated by the control means depending on the operating state of the post-treatment plant (4) downstream.

11. The method according to one of claims 8 to 10, **characterized in that**, upon detecting a malfunction in the post-treatment plant (4), the first manipulator (10) stacks the products (8) arriving from the pre-treatment plant at the first transfer station (5) and **in that** the products already located on the conveyor belts (9) are transported to the second manipulator (11) by the conveyor belts (9) in order to be stacked by the second manipulator (11).

12. The method according to one of claims 8 to 11, **characterized in that**, in the case of stacked products (8) located on the transport means (3), the second manipulator (11), for unstacking the products (8), is faster with unstacking than the first manipulator (10) is with stacking the arriving products (8).

13. The method according to claim 12, **characterized in that** the second manipulator (11) is faster by at least 10 %, preferably at least 20 %, with unstacking the products (8) than the first manipulator (10) is with stacking the products (8).

## Revendications

1. Une ligne de production (1) pour la production de produits (8) plats et empilables de l'industrie alimentaire, de manière particulièrement préférée de produits cuits plats, avec une installation de prétraitement, un dispositif de transport ou convoyeur (3) disposé en aval et une installation de traitement ultérieur (4) disposée en aval du dispositif de transport, le dispositif de transport présentant une première poste de transfert (5) à l'entrée du dispositif de transport (3), au moins deux bandes transporteuses (9) en aval de la première poste de transfert (5) et une deuxième poste de transfert (6) en aval des au moins deux bandes transporteuses (9) à la sortie du dispositif de transport (3), et la première poste de transfert (5) présentant un premier manipulateur (10) par lequel les produits (8) peuvent être empilés les uns par-dessus des autres et/ou dépilés, et la deuxième poste de transfert (6) présentant un deuxième manipulateur (11) par lequel les produits (8) peuvent être empilés les uns par-dessus des autres et/ou dépilés, de sorte que les produits (8) peuvent être stockés dans le dispositif de transport (3) par formation des piles (12, 13, 22) des produits (8),
**caractérisée en ce que** le dispositif de transport (3) est prévu comme un dispositif de transport en ligne (3) de la ligne de production (1) et **en ce qu'**un dispositif de commande pour commander les manipulateurs (10, 11) et pour commander individuellement les bandes transporteuses (9) individuelles est prévu, de sorte que la direction de transport et/ou la vitesse de transport de la bande transporteuse (9) respective est modifiable.

2. La ligne de production (1) selon la revendication 1, **caractérisée en ce qu'**il est prévu un dispositif de détection automatisée des défaillances de fonctionnement de l'installation de traitement ultérieur (4) et un dispositif d'enregistrement de l'état de chargement d'une bande transporteuse, de sorte que l'empilement et le dépilage des produits (8) sur la bande transporteuse peuvent être commandés par les deux dispositifs à l'aide d'un algorithme approprié.

3. La ligne de production (1) selon l'une des revendications 1 ou 2, **caractérisée en ce que** les au moins deux bandes transporteuses (9) sont réalisées comme des modules de bande transporteuse déplaçables, ce qui permet de pouvoir ajuster la longueur de la bande transporteuse totale effective entre la première poste de transfert (5) et la deuxième poste de transfert (6) en alignant les modules de bande transporteuse.

4. La ligne de production (1) selon la revendication 3, **caractérisée en ce qu'**un des modules de bande transporteuse du dispositif de transport (3) présente un ruban de levage, le ruban de levage étant configuré de telle sorte qu'il peut transporter les produits (8) dans une direction sensiblement verticale vers un autre plan de transport.

5. La ligne de production (1) selon l'une des revendications précédentes, **caractérisée en ce qu'**un dispositif de refroidissement et/ou d'équilibrage de température, un déshumidificateur et/ou un dispositif de protection est prévu sur le dispositif de transport (3), de sorte que les produits (8) peuvent être refroidis et/ou déshumidifiés ou gardés secs.

6. La ligne de production (1) selon l'une des revendications précédentes, **caractérisée en ce que** le dispositif de commande est relié à au moins un capteur disposé sur une installation de traitement ultérieur (4) disposée en aval du dispositif de transport (3), le capteur mesurant l'état de fonctionnement de l'installation de traitement ultérieur (4), de sorte que l'activité des manipulateurs (10, 11) des postes de transfert (5, 6) ainsi que la direction et la vitesse des bandes transporteuses (9) peuvent être commandées par le dispositif de commande en fonction de l'état de fonctionnement de l'installation de traitement ultérieur (4) suivante.

7. La ligne de production (1) selon l'une des revendications précédentes, **caractérisée en ce que** les produits (8) sont réalisés comme gaufrettes creuses ou plates et **en ce que** l'installation de prétraitement présente un four continu pour faire cuire les gaufrettes creuses ou plates de façon continue et l'installation de traitement ultérieur (4) présente un dispositif de coupe pour couper les gaufrettes creuses ou plates.

8. Une méthode de stockage intermédiaire ou de stockage de produits (8) plats et empilables pour l'utilisation dans une ligne de production (1) selon l'une des revendications 1 à 7 pour la production de produits (8) plats et empilables de l'industrie alimentaire, de manière particulièrement préférée de produits cuits plats, avec une installation de prétraitement, un dispositif de transport ou convoyeur (3) disposé en aval et une installation de traitement ultérieur (4) disposée en aval du dispositif de transport, le dispositif de transport présentant une première poste de transfert (5) à l'entrée du dispositif de transport (3), au moins deux bandes transporteuses (9) en aval de la première poste de transfert (5) et une deuxième poste de transfert (6) en aval des au moins deux bandes transporteuses (9) à la sortie du dispositif de transport (3), et la première poste de transfert (5) présentant un premier manipulateur (10) par lequel les produits (8) peuvent être empilés les uns par-dessus des autres et/ou dépilés, et la deuxième poste de transfert (6) présentant un deuxième manipulateur (11) par lequel les produits (8) peuvent être empilés les uns par-dessus des autres et/ou dépilés de sorte que les produits (8) peuvent être stockés dans le dispositif de transport (3) par formation des piles (12, 13, 21, 22) des produits (8),
**caractérisée en ce que** le dispositif de transport (3) est prévu comme un dispositif de transport en ligne de la ligne de production (1) et **en ce qu'**un dispositif de commande pour commander les manipulateurs (10, 11) et pour commander individuellement les bandes transporteuses (9) individuelles est prévu, de sorte que la direction de transport et/ou la vitesse de transport de la bande transporteuse (9) respective est modifiable, dans laquelle, en fonctionnement normal, les produits (8) sont transférés de l'installation de prétraitement vers la première poste de transfert (5) et de là, sous forme individuelle, via les bandes transporteuses et la deuxième station de transfert (6), vers l'installation de traitement ultérieur (4).

9. La méthode selon la revendication 8, **caractérisée en ce que** les au moins deux bandes transporteuses (9) présentent au moins deux bandes transporteuses (9) qui peuvent être commandées indépendamment l'une de l'autre et **en ce que**, en service, la direction de transport et/ou la vitesse des bandes transporteuses (9) sont changées et/ou modifiées.

10. La méthode selon la revendication 8 ou 9, **caractérisée en ce qu'**il est prévu un dispositif de commande et un capteur relié au dispositif de commande et disposé sur une installation de traitement ultérieur (4) disposée en aval du dispositif de transport (3), le capteur déterminant l'état de fonctionnement de l'installation de traitement ultérieur (4), et l'activité des manipulateurs (10, 11) des postes de transfert (5, 6) ainsi que la direction et la vitesse des bandes transporteuses (9) sont commandées et/ou contrôlées par le dispositif de commande en fonction de l'état de fonctionnement de l'installation de traitement ultérieur (4) suivante.

11. La méthode selon l'une des revendications 8 à 10, **caractérisée en ce, que** lors de la détection d'une défaillance de fonctionnement de l'installation de traitement ultérieur (4), le premier manipulateur (10) empile les produits (8) qui arrivent de l'installation de prétraitement dans la première poste de transfert (5) et **en ce que** les bandes transporteuses (9) transfèrent les produits (8) qui se trouvent déjà sur les bandes transporteuses (9) vers le deuxième manipulateur (11) pour être empilés par le deuxième manipulateur (11).

12. La méthode selon l'une des revendications 8 à 11, **caractérisée en ce que**, avec des produits (8) empilés situés sur le dispositif de transport (3) pour le dépilage des produits (8), le deuxième manipulateur (11) dépile plus rapidement que le premier manipulateur (10) n'empile les produits (8) entrants.

13. La méthode selon la revendication 12, **caractérisée en ce que** le deuxième manipulateur (11) dépile les produits (8) au moins 10 % plus vite, de préférence au moins 20 %, que le premier manipulateur (10) n'empile les produits (8).
